# EUROPEAN PATENT APPLICATION

(11) **EP 4 664 169 A1**
(43) Date of publication of application: **17.12.2025**
(21) Application number: 23921285.5
(22) Date of filing: 02.11.2023
(51) Int. Cl.: G02B 6/36, B08B 1/32, G02B 6/40

(54) **OPTICAL CONNECTOR CLEANING TOOL**

(30) Priority: 10.02.2023 JP 2023019026
(71) Applicant: Fujikura Ltd., Tokyo 135-8512 (JP)
(72) Inventor: SAKAGUCHI, Yuya, Sakura-shi, Chiba 285-8550 (JP)
(74) Representative: Ter Meer Steinmeister & Partner
(86) International application number: PCT/JP2023/039659
(87) International publication number: WO 2024/166463

(57) **Abstract**

An optical connector cleaning tool 1 includes a first cleaning element 10 that the guide pin 112 of the optical connector 100 is capable of penetrating and that comprises a plurality of thread-like members 11 arranged to extend in a same direction, a first cleaning shaft 30 that includes an insertion hole 314 into which the guide pin 112 is capable of being inserted along a first direction and a first pressing surface 311 to which the insertion hole 314 is open and that presses the first cleaning element 10 against the connection end surface 111 of the optical connecter 100, and a rotation mechanism that rotates the first cleaning shaft 30 about the first direction as an axis.

## Description

### [TECHNICAL FIELD]

The present invention relates to an optical connector cleaning tool that cleans a connection end surface of an optical connector.

For designated countries that are permitted to be incorporated by reference in the literature, the contents of Japanese Patent Application No. 2023-19026 filed with Japan Patent Office on February 10, 2023 is incorporated herein by reference and is regarded as a part of the description of this specification.

### [BACKGROUND ART]

An optical connector end surface cleaner is known in which thread-like cleaning members are brought into contact with an area around a pin on an end surface of an optical connector to clean the area (refer to, for example, Patent Document 1).

### [CITATION LIST]

### [PATENT DOCUMENT]

PATENT DOCUMENT 1: JP 2019-159304 A

### [SUMMARY OF THE INVENTION]

### [PROBLEMS TO SOLVED BY INVENTION]

In the above-mentioned cleaner, when the cleaning member passes around the pin, the threads constituting the cleaning member are pushed apart by the pin, and therefore, an area where the cleaning member cannot face the end surface of the optical connector inevitably occurs on the upstream side and the downstream side of the pin. For this reason, there is a problem that there is a case where an unwiped part is left around the pin and sufficient cleaning quality cannot be ensured.

An object of the present invention is to provide an optical connector cleaning tool that is capable of reducing the unwiped part left on the connection end surface of the optical connector.

### [MEANS FOR SOLVING PROBLEM]

[1] An aspect 1 of the present invention is an optical connector cleaning tool that cleans a connection end surface of an optical connector that includes the connection end surface and a guide pin disposed on the connection end surface, the optical connector cleaning tool comprising: a first cleaning element that the guide pin is capable of penetrating and that comprises a plurality of thread-like members arranged to extend in a same direction; a first pressing member that comprises: an insertion hole into which the guide pin is capable of being inserted along a first direction; and a first pressing surface to which the insertion hole is open and that presses the first cleaning element against the connection end surface; and a rotation mechanism that rotates the first pressing member about the first direction as an axis.
[2] An aspect 2 of the present invention may be the optical connector cleaning tool of the aspect 1, wherein the optical connector cleaning tool may comprise: a supply and collection mechanism that supplies the first cleaning element to the first pressing surface and collects the first cleaning element from the first pressing surface.
[3] An aspect 3 of the present invention may be the optical connector cleaning tool of the aspect 1 or 2, wherein the optical connector cleaning tool may comprise: the two first pressing members into which the two guide pins of the optical connector are respectively capable of being inserted, wherein each of the first pressing members may have a cross-sectional shape that is non-circular, and the rotation mechanisms may rotate the first pressing members in a state in which orientations of the cross-sectional shapes with respect to the connection end surface are different from each other.
[4] An aspect 4 of the present invention may be the optical connector cleaning tool of the aspect 3, wherein the optical connector cleaning tool may comprise: a second pressing member that is disposed between the first pressing members and that comprises a second pressing surface that presses a second cleaning element against the connection end surface.
[5] An aspect 5 of the present invention may be the optical connector cleaning tool of the aspect 4, wherein the optical connector cleaning tool may comprise: a moving mechanism that moves the second pressing member between the first pressing members along an arrangement direction of the first pressing members.
[6] An aspect 6 of the present invention may be the optical connector cleaning tool of the aspect 5, wherein the moving mechanism may move the second pressing member toward the first pressing member whose a short length direction of the cross-sectional shape is aligned with the arrangement direction in interlocking with rotations of the first pressing members by the rotating mechanisms.
[7] An aspect 7 of the present invention may be the optical connector cleaning tool of the aspect 5 or 6, wherein the moving mechanism may move the second pressing member toward other of the first pressing members by pressing the second pressing member by one of the first pressing members in the arrangement direction in accordance with rotations of the first pressing members by the rotation mechanisms.

### [EFFECT OF THE INVENTION]

In the present invention, the first pressing member that presses the first cleaning element against the area around the guide pin on the connection end surface of the optical connector is rotated by the rotation mechanism. Therefore, in the present invention, it is possible to bring the first cleaning element into contact with the entire area around the guide pin on the connection end surface of the optical connector, and it is possible to reduce the unwiped part left on the connection end surface.

### [BRIEF DESCRIPTION OF DRAWING(S)]

FIG. 1 is a front view showing the optical connector as a cleaning object of the optical connector cleaning tool in the first embodiment of the present invention;
FIG. 2 is a schematic cross-sectional view showing the overall configuration of the optical connector cleaning tool in the first embodiment of the present invention;
FIG. 3(a) is a plan view showing the first cleaning element in the first embodiment of the present invention, and FIG. 3(b) is a plan view showing a state in which the guide pin penetrates the first cleaning element;
FIG. 4(a) and FIG. 4(b) are front and plan views showing the front-end portions of the first and second cleaning shafts in the first embodiment of the present invention;
FIG. 5 is a schematic cross-sectional view showing the first supply and collection mechanism and the rotation mechanism included in the optical connector cleaning tool in the first embodiment of the present invention;
FIG. 6 is a schematic cross-sectional view showing the second supply and collection mechanism included in the optical connector cleaning tool in the first embodiment of the present invention;
FIG. 7(a) and 7(b) are front and plan views showing the front-end portions of the first and second cleaning shafts in the second embodiment of the present invention;
FIG. 8 is a cross-sectional view taken along line VIII-VIII in FIG. 7(a);
FIG. 9(a) and FIG. 9(b) are front and plan views showing a state in which the first cleaning shafts are rotated by 45 degrees from the state shown in FIG. 7(a) and FIG. 7(b); and
FIG. 10(a) and FIG. 10(b) are front and plan views showing a state in which the first cleaning shafts are further rotated by 45 degrees from the state shown in FIG. 9(a) and FIG. 9(b).

### [MODE(S) FOR CARRYING OUT THE INVENTION]

Hereinafter, embodiments of the invention will be described with reference to the drawings.

### <<FIRST EMBODIMENT>>

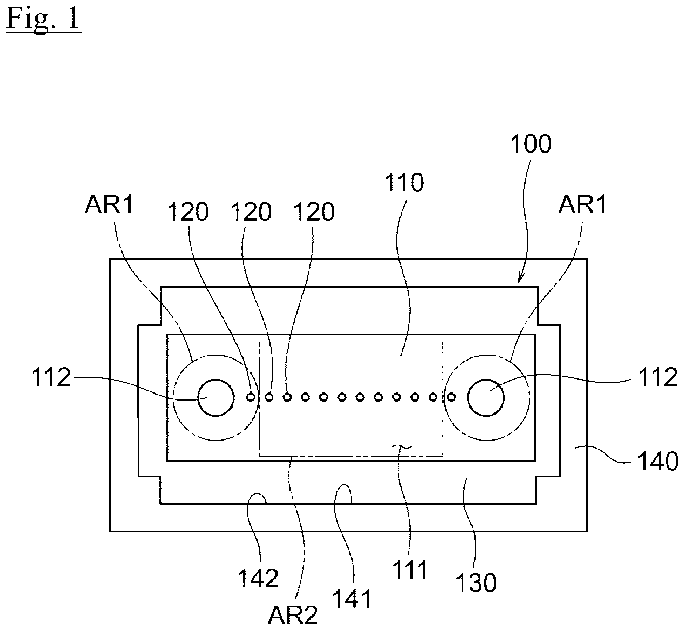

The optical connector cleaning tool 1 in the present embodiment is a cleaner that cleans a connection end surface of an optical connector that connects optical fibers. FIG. 1 is a front view showing the optical connector 100 as a cleaning object of the optical connector cleaning tool 1 in the present embodiment.

Although not particularly limited, the optical connector 100 that is a cleaning object of the optical connector cleaning tool 1 is, for example, a multi-fiber collective connection type optical connector plug that simultaneously connects multiple optical fibers.

Specifically, as shown in FIG. 1, the optical connector 100 includes a ferrule 110 having a flat (rectangular) cross-sectional shape (end surface shape). The ferrule 110 is a so-called MT (Mechanical Transferable) ferrule and has multiple (for example, 12 (twelve)) fiber holding holes arranged along the cross-sectional longitudinal direction of the ferrule 110. The optical fiber 120 is inserted in each of the fiber holding holes, and the optical fiber 120 is fixed to the ferrule 110 by an adhesive. The optical fibers 120 are exposed from the end surface 111 of the ferrule 110. The ferrule 110 is held by the housing 130.

The number of the optical fibers 120 held in the ferrule 110 is not particularly limited and may be, for example, more or less than twelve (12). The optical fibers 120 may be arranged in multiple rows (for example, two (2) rows) along the cross-sectional longitudinal direction of the ferrule 110. As the ferrule 110 described above, an MT ferrule specified in JIS C 5981 or JIS C 5982 may be used.

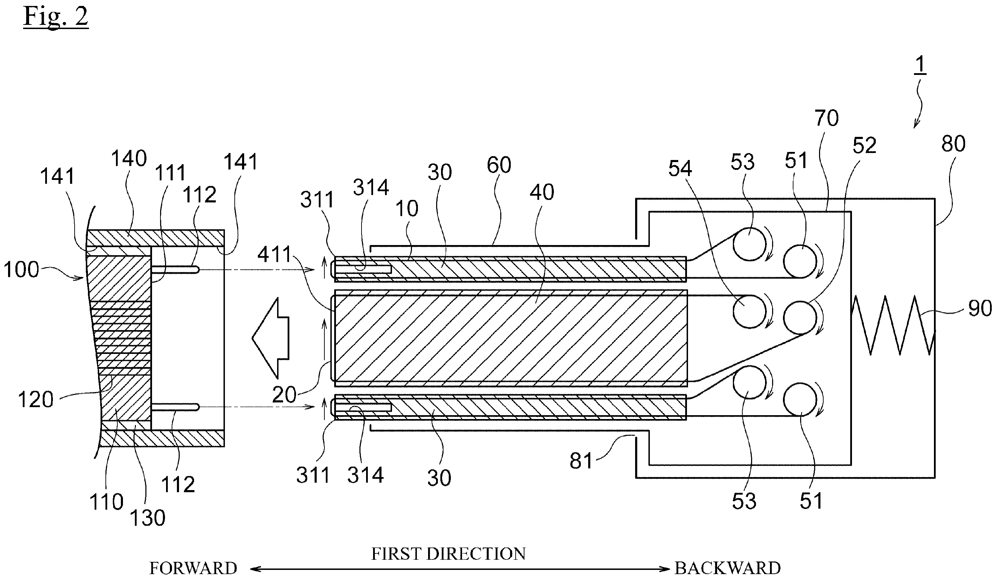

When the pair of optical connectors 100 including the ferrules 110 are connected, the pair of optical connectors 100 are inserted into the insertion ports 141 on both sides of the sleeve-shaped adapter 140. The optical fibers 120 exposed from the end surfaces 111 of the ferrules 110 are optically connected to each other by abutting the end surfaces 111 of the ferrules 110 of the pair of optical connectors 100. At this time, the optical connectors 100 are positioned with high accuracy by inserting the guide pins 112 of one ferrule 110 into the guide holes (not shown) of the other ferrule 110. The guide pin 112 is a circular columnar pin and has a tapered front-end part to facilitate insertion into the guide hole (refer to FIG. 2).

If a contaminant such as dirt, dust, and oil is adhered to the end surface 111 of the ferrule 110 at the time of abutting, it may cause damage at the time of attaching and detaching, an increase in transmission loss, and the like. Therefore, the end surface 111 of the ferrule 110 is cleaned using the optical connector cleaning tool 1 described below before the optical connectors 100 are connected. At the time of this cleaning, the optical connector 100 to be cleaned is inserted into one insertion port 141 of the adapter 140, and the end surface 111 of the ferrule 110 of the optical connector 100 is cleaned by inserting the optical connector cleaning tool 1 into the other insertion port 141 of the adapter 140 (refer to FIG. 2).

Although the optical connector 100 described above is an optical connector plug used in the plug-adapter-plug coupling system, the end surface of the ferrule of the optical connector receptacle used in the plug-receptacle coupling system may be cleaned using the optical connector cleaning tool 1 described below. Specifically, the optical connector receptacle includes a ferrule attached to the ends of the optical fibers and incorporated into a housing into which the optical connector plug is inserted.

Alternatively, a cap having an inner hole having the same shape as the inner hole of the adapter may be attached to the front end of the optical connector cleaning tool 1, and the optical connector plug may be inserted into the cap to clean the connection end surface of the optical connector plug alone in a state in which the optical connector plug is not inserted into the adapter.

Hereinafter, the configuration of the optical connector cleaning tool 1 in the present embodiment will be described in detail with reference to FIG. 2 to FIG. 6.

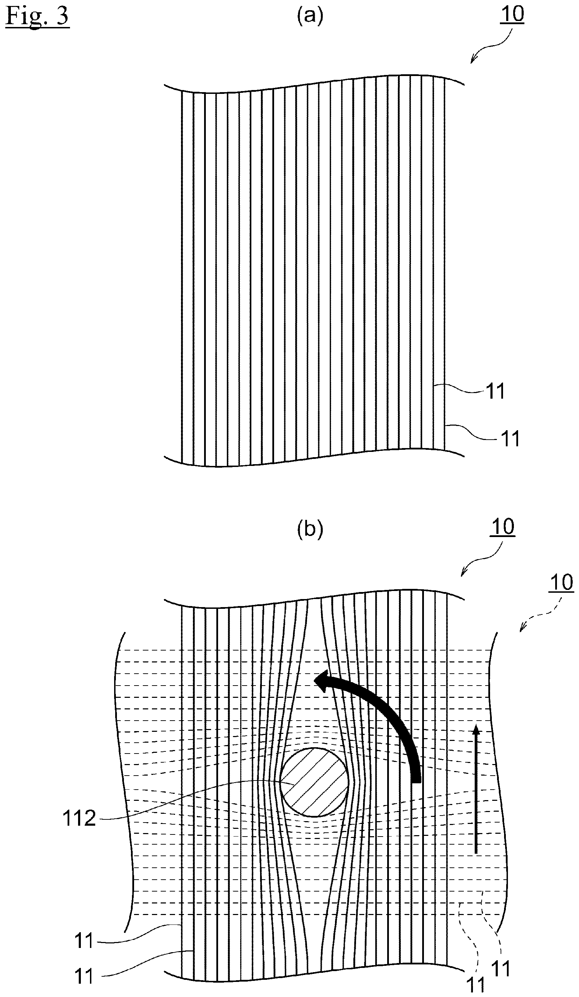

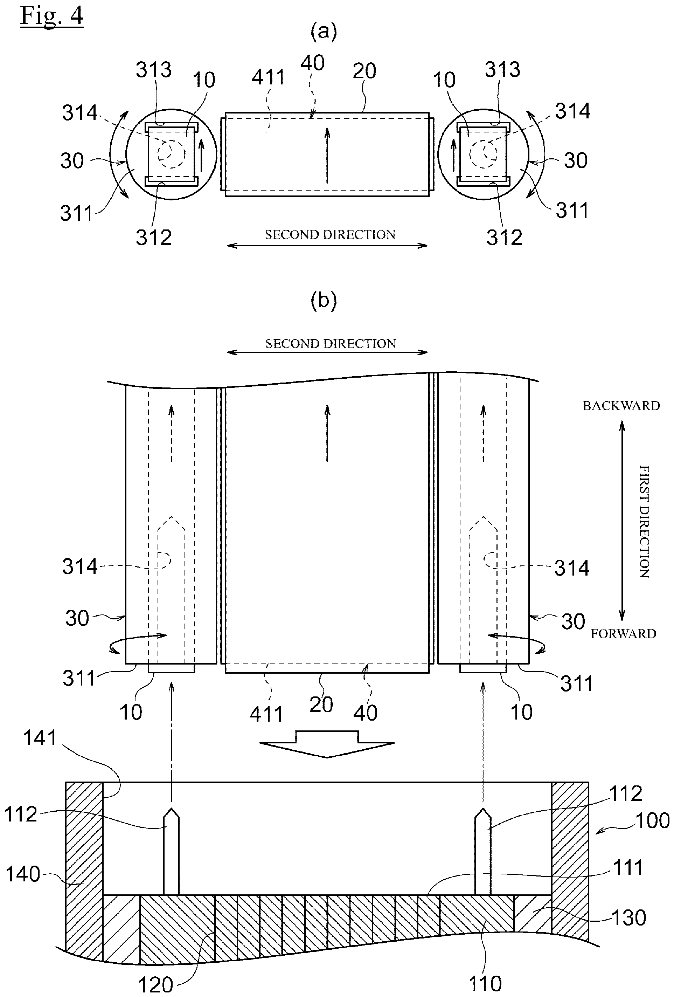

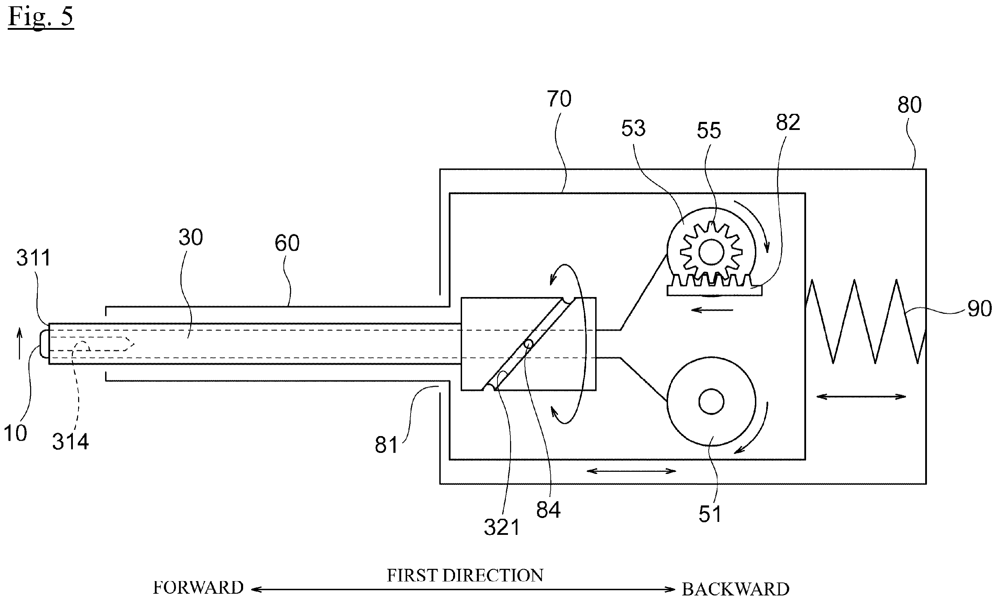

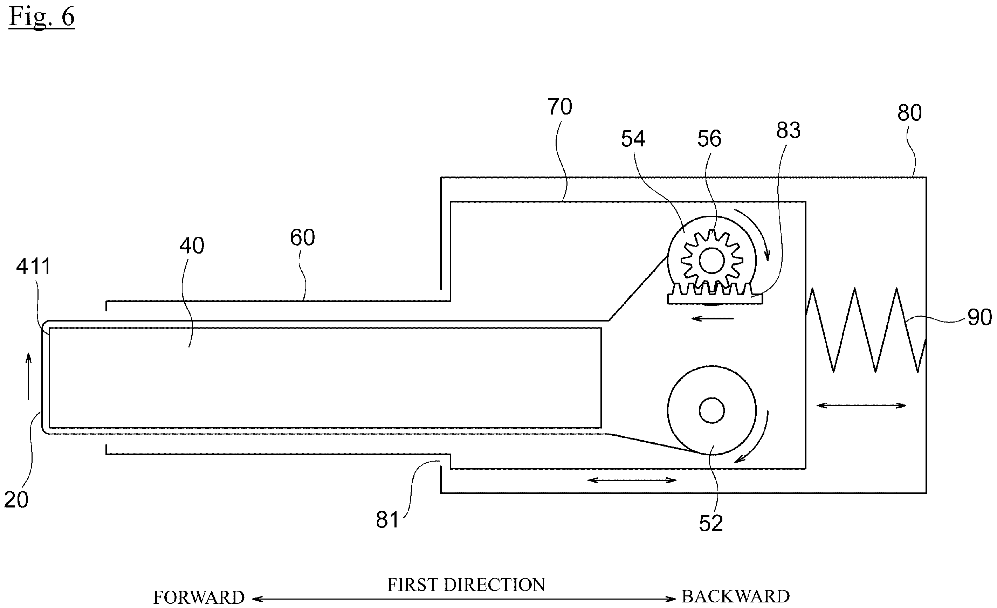

FIG. 2 is a schematic cross-sectional view showing the overall configuration of the optical connector cleaning tool 1 in the present embodiment. FIG. 3(a) is a plan view showing the first cleaning element 10 in the present embodiment, and FIG. 3(b) is a plan view showing a state in which the guide pin 112 penetrates the first cleaning element 10. FIG. 4(a) and FIG. 4(b) are front and plan views showing the front-end portions of the first and second cleaning shafts 30 and 40 in the present embodiment. FIG. 5 is a schematic cross-sectional view showing the first supply and collection mechanism and the rotation mechanism included in the optical connector cleaning tool 1 in the present embodiment, and FIG. 6 is a schematic cross-sectional view showing the second supply and collection mechanism included in the optical connector cleaning tool 1 in the present embodiment.

Since FIG. 2, FIG. 5, and FIG. 6 are diagrams schematically showing the configuration of the optical connector cleaning tool 1, the running direction of the cleaning elements 10 and 20 with respect to the connection end surface 111 of the optical connector 100 in the figures does not match the actual running direction. The actual running directions of the cleaning elements 10 and 20 with respect to the connection end surface 111 of the optical connector 100 are as shown by the straight arrows in FIG. 4(a) and FIG. 4(b).

As shown in FIG. 2, the optical connector cleaning tool 1 (hereinafter, also simply referred to as "cleaner 1") in the present embodiment cleans the connection end surface 111 of the optical connector 100 using two types of cleaning elements 10 and 20. The first cleaning element 10 is assigned to the cleaning of the area AR1 (refer to the frame indicated by the dashed dotted line in FIG. 1) around the guide pin 112 on the connecting end surface 111 On the other hand, the second cleaning element 20 is assigned to the cleaning of the area AR2 (refer to the frame indicated by the dashed two-dotted line in FIG. 1) between the two guide pins 112 on the connection end surface 111.

As shown in FIG. 3(a), the first cleaning element 10 includes a plurality of thread-like members 11 arranged to extend in the same direction (vertical direction in the figure). Although not particularly limited, as an example of the thread-like member 11, an ultrafine fiber made of polyester, nylon, or the like can be exemplified. The first cleaning element 10 does not include any other thread-like member that intersects the plurality of thread-like members 11. Therefore, as shown in FIG.3(b), even when the guide pin 112 of the optical connector 100 penetrates the first cleaning element 10, the first cleaning element 10 can run with respect to the guide pin 112 along the same direction (vertical direction in the figure) as the extending direction of the thread-like members 11. The plurality of thread-like members 11 are arranged at equal intervals, and the interval (pitches) between them is smaller than the diameter of the guide pin 112. Although not particularly limited, the interval (pitch) between the plurality of thread-like members 11 is preferably 1/5 or less of the outer diameter of the guide pin 112. Further, the interval (pitch) between the plurality of thread-like members 11 may be the same as the thickness of the thread-like member 11, and the thread-like members 11 may be disposed in contact with each other without any gap.

On the other hand, as shown FIG. 4(a) and FIG. 4(b), the second cleaning element 20 is a wide belt-shaped tape and can wipe the area AR2 between the guide pins 11 on the connecting end surface 111 of the optical connector 100 at once. Although not particularly limited, as an example of such a tape-shaped second cleaning element 20, a woven fabric made of polyester, nylon, or the like can be exemplified.

As shown in FIG. 2, the cleaner 1 in the present embodiment includes a pair of first cleaning shafts 30, a second cleaning shaft 40, feeding bobbins 51 and 52, winding bobbins 53 and 54, a guide nozzle 60, a support body 70, a housing 80, and a biasing member 90.

As shown in FIG. 2 and FIG. 5, the first cleaning shaft 30 has a pressing surface 311 at the front-end for pressing the first cleaning element 10 against the connection end surface 111 of the optical connector 100. The first cleaning element 10 is held by the first cleaning shaft 30 so that the first cleaning element 10 is turned back at the pressing surface 311. The unused first cleaning element 10 is supplied to the first cleaning shaft 30 from the feeding bobbin 51. The first cleaning element 10 used on the pressing surface 311 is collected to the winding bobbin 53. The optical connector cleaning tool 1 of the present embodiment includes two first cleaning shafts 30 corresponding to the number of guide pins 112 included in the optical connector 100, and both of the two first cleaning shafts 30 have the same configuration.

Specifically, as shown in FIG. 4(a) and FIG. 4(b), the first cleaning shaft 30 includes a front-end portion that has a circular cross-sectional shape. The first cleaning element 10 can pass through the inside of the first cleaning shaft 30, and a pair of guide holes 312 and 313 are formed in the pressing surface 311. As shown in FIG. 4(a) to FIG. 5, the unused first cleaning element 10 fed from the feeding bobbin 51 passes through the inside of the first cleaning shaft 30 and one guide hole 312 and is supplied to the pressing surface 311. Then, the used first cleaning element 10 passes through the other guide hole 313 and the inside of the first cleaning shaft 30 from the pressing surface 311 and is wound on the winding bobbin 53.

An insertion hole 314 is formed in the pressing surface 311. The insertion hole 314 has a circular cross-sectional shape and opens at the center of the pressing surface 311. The guide pin 112 of the optical connector 100 can be inserted into the insertion hole 314. The center of the insertion hole 314 substantially coincides with the below-mentioned rotation axis of the first cleaning shaft 30.

The first cleaning shaft 30 may be composed of a plurality of members. For example, as in the second embodiment described later, the first cleaning shaft 30 may include a cleaning head having a pressing surface and a shaft body that supports the cleaning head. The first cleaning shaft 30 may include a biasing member (for example, a coil spring or the like) that biases the cleaning head forward.

As shown in FIG. 2 and FIG. 6, the second cleaning shaft 40 also has a pressing surface 411 at the front-end for pressing the second cleaning element 20 against the connection end surface 111 of the optical connector 100. The second cleaning element 20 is held by the second cleaning shaft 40 so that the second cleaning element 20 is turned back at the pressing surface 411. The unused second cleaning element 20 is supplied to the second cleaning shaft 40 from the feeding bobbin 52. The second cleaning element 20 used on the pressing surface 411 is collected to the winding bobbin 54.

Specifically, as shown in FIG. 4(a) and FIG. 4(b), the second cleaning shaft 40 includes a front-end portion that has a flat rectangular cross-sectional shape. The second cleaning element 20 supplied to and collected from the pressing surface 411 can pass above and below the second cleaning shaft 40. As shown in FIG. 4(a), FIG. 4(b) and FIG. 6, the unused second cleaning element 20 fed from the feeding bobbin 52 passes below the second cleaning shaft 40 and is supplied to the pressing surface 411. Then, the used second cleaning element 10 passes above the second cleaning shaft 40 from the pressing surface 411 and is wound around the winding bobbin 54.

Similar to the above-described first cleaning shaft 30, the second cleaning shaft 40 may be configured so that the second cleaning element 20 passes through the inside of the second cleaning shaft 40. The second cleaning shaft 40 may be composed of a plurality of members. For example, the second cleaning shaft 40 may include a cleaning head having a pressing surface and a shaft body that supports the cleaning head. The second cleaning shaft 40 may include a biasing member (for example, a coil spring or the like) that biases the cleaning head forward.

The second cleaning shaft 40 is disposed between the pair of first cleaning shafts 30 to correspond to the arrangement of the above-mentioned areas AR1 and AR2 (refer to FIG. 1). As shown in FIG. 2, FIG. 5, and FIG. 6, the first and second cleaning shafts 30 and 40 are accommodated in the guide nozzle 60 so that the front-end portions of the first and second cleaning shafts 30 and 40 protrude.

The front-end portion of the guide nozzle 60 has an outer shape that can fit into the insertion port 141 of the adapter 140 of the optical connector 100. When the front-end portion of the guide nozzle 60 is fitted into the insertion port 141 of the adapter 140, the pressing surfaces 311 and 411 of the first and second cleaning shafts 30 and 40 are positioned with respect to the connection end surface 111 of the optical connector 100, and the insertion holes 314 of the first cleaning shafts 30 are positioned with respect to the guide pins 112 of the optical connector 100.

The guide nozzle 60 is connected to the support body 70, and the rear end portions of the first and second cleaning shafts 30 and 40 enter the support body 70. The pair of first cleaning shafts 30 are supported by the support body 70 to be rotatable about a first direction as an axis. On the other hand, the second cleaning shaft 40 is fixed to the support body 70 and is not rotatable with respect to the support body 70. Here, the first direction is an insertion/removal direction of the cleaner 1 with respect to the adapter 140 when cleaning the optical connector 100, and the first direction is also an axial direction (long length direction) of the first cleaning shaft 30. Furthermore, the first direction is also a pressing direction in which the pressing surface 311 or 411 presses the connecting end surface 111.

The above-described feeding bobbins 51 and 52 and the winding bobbins 53 and 54 are also accommodated in the support body 70. The bobbins 51 to 54 are rotatably supported by the support body 70. As shown in FIG. 5 and FIG. 6, all the bobbins 51 to 54 are rotatable only in the clockwise direction in the figure, and the counterclockwise rotation is restricted by a ratchet mechanism not particularly shown. A long as the bobbins 51 to 54 is rotatable only in one direction, contrary to the present embodiment, the bobbins 51 to 54 may be rotatable only counterclockwise and the clockwise rotation may be restricted.

The support body 70 is accommodated in the housing 80 to be relatively movable along the first direction. An opening 81 is formed in the housing 80, and the guide nozzle 60 protrudes forward from the housing 80 through the opening 81.

The biasing member 90 is interposed between the support body 70 and the housing 80. The biasing member 90 biases the support body 70 forward with respect to the housing 80. Although not particularly limited, as a specific example of the biasing member 90, for example, a coil spring can be exemplified.

As shown in FIG. 5, the winding bobbin 53 supported by the support body 70 has a pinion gear 55. The housing 80 has a rack gear 82 meshing with the pinion gear 55. When the support body 70 relatively moves with respect to the housing 80 along the first direction, the linear motion is converted into a rotation motion by the rack gear 82 and the pinion gear 55, the winding bobbin 53 rotates, and therefore the first cleaning element 10 used on the pressing surface 311 of the first cleaning shaft 30 is wound around the winding bobbin 53. Further, since the feeding bobbin 51 is rotated by the tensile force acting on the first cleaning element 10 in accordance with the winding movement, the unused first cleaning element 10 is fed from the feeding bobbin 51 to the pressing surface 311 of the first cleaning shaft 30.

That is, in the present embodiment, the "first supply and collection mechanism" that supplies and collects the first cleaning element 10 to and from the pressing surface 311 of the first cleaning shaft 30 is realized by the two bobbins 51 and 53, the rack and pinion mechanism including the rack gear 82 and the pinion gear 55, and the relative movement of the support body 70 with respect to the housing 80. The configuration of the first supply and collection mechanism is not particularly limited to the above, as long as it has the function of supplying the first cleaning element 10 to the pressing surface 311 of the first cleaning shaft 30 and the function of collecting the first cleaning element 10 from the pressing surface 311.

Similarly, as shown in FIG. 6, the winding bobbin 54 held by the support body 70 has a pinion gear 56. The housing 80 has a rack gear 83 meshing with the pinion gear 55. When the support body 70 relatively moves with respect to the housing 80, the linear motion is converted into a rotation motion by the rack gear 83 and the pinion gear 56, the winding bobbin 54 rotates, and therefore the second cleaning element 20 used on the pressing surface 311 of the first cleaning shaft 30 is wound around the winding bobbin 54. Further, since the feeding bobbin 52 is rotated by the tensile force acting on the second cleaning element 20 in accordance with the winding movement, the second cleaning element 20 is fed from the feeding bobbin 52 to the pressing surface 411 of the second cleaning shaft 40.

That is, in the present embodiment, the "second supply and collection mechanism" that supplies and collects the second cleaning element 20 to and from the pressing surface 411 of the second cleaning shaft 40 is realized by the two bobbins 53 and 54, the rack and pinion mechanism including the rack gear 83 and the pinion gear 56, and the relative movement of the support body 70 with respect to the housing 80. The configuration of the second supply and collection mechanism is not particularly limited to the above, as long as it has the function of supplying the second cleaning element 20 to the pressing surface 411 of the second cleaning shaft 40 and the function of collecting the second cleaning element 20 from the pressing surface 411.

As shown in FIG. 5, a spiral cam groove 321 is formed on the outer peripheral surface of the rear end portion of the first cleaning shaft 30. The housing 80 has a cam pin 84 inserted into the cam groove 321. When the support body 70 relatively moves with respect to the housing 80 along the first direction, the cam pin 84 relatively slides in the cam groove 321, and therefore, the first cleaning shaft 30 rotates about the first direction as a center axis. In other words, the first cleaning shaft 30 rotates about an imaginary axis extending parallel to the first direction.

That is, in the present embodiment, the "rotation mechanism" that rotates the first cleaning shaft 30 around the first direction as an axis is realized by the cam mechanism including the cam pin 84 and the cam groove 321, and the relative movement of the support body 70 with respect to the housing 80. The configuration of the rotation mechanism is not limited to the above, as long as it has the function of rotating the first cleaning shaft 30 around the first direction as an axis.

Next, an example of a method of using the optical connector cleaning tool 1 described above will be described.

When cleaning the connection end surface 111 of the optical connector 100 using the optical connector cleaning tool 1, as shown in FIG. 2, the operator first inserts the front-end portion of the cleaner 1 into the insertion port 141 of the adapter 140. At this time, when the front-end portion of the guide nozzle 60 is fitted into the insertion port 141, the pressing surfaces 311 and 411 of the first and second cleaning shafts 30 and 40 are positioned with respect to the connection end surface 111 of the optical connector 100, and the insertion holes 314 of the first cleaning shafts 30 are positioned with respect to the guide pins 112 of the optical connector 100.

Then, when the operator further inserts the front-end portion of the cleaner 1 into the insertion port 141 of the adapter 140, the guide pins 112 of the optical connector 100 penetrate the first cleaning elements 10 and are inserted into the insertion holes 314 of the first cleaning shaft 30, and the pressing surfaces 311 and 411 of the first and second cleaning shafts 30 and 40 respectively press the first and second cleaning elements 10 and 20 against the connection end surface 111 of the optical connector 100.

Next, when the operator pushes the housing 80 against the guide nozzle 60 along the first direction, the biasing member 90 contracts, and the rack gear 82 and pinion gear 55 rotate the winding bobbin 53. As a result, the used first cleaning element 10 is collected from the pressing surface 311 to the winding bobbin 53, and the unused first cleaning element 10 is supplied from the feeding bobbin 51 to the pressing surface 311 of the first cleaning shaft 30. Therefore, the first cleaning element 10 slides while being pressed against the connection end surface 111 of the optical connector 100, and the contaminant adhering to the area AR1 around the guide pin 112 on the connection end surface 111 is wiped.

At this time, in the present embodiment, the cam pin 84 of the housing 80 relatively slides inside the cam groove 321 of the first cleaning shaft 30 by the above-mentioned pushing operation of the housing 80 with respect to the guide nozzle 60 by the operator, and the first cleaning shaft 30 rotates around the first direction as a rotation axis (rotation center). As a result of the rotation of the rotation mechanism, as shown by the broken line in FIG. 3(b), the first cleaning element 10 pressed against the connection end surface 111 by the first cleaning shaft 30 rotates about the guide pin 112. Therefore, even if the first cleaning element 10 is pushed apart by the guide pin 112 of the optical connector 100, the area where the first cleaning element 10 does not face is not generated around the guide pin 112, it is possible to wipe the contaminant from the area around the entire circumference of the guide pin 112 on the connection end face 111 of the optical connector 100. Although the first cleaning element 10 is rotated by 90 degrees by the rotation mechanism in FIG. 3(b), the rotation angle of the first cleaning shaft 30 by the rotation mechanism is not limited to 90 degrees.

In addition, since the rack gear 83 and the pinion gear 56 rotate the winding bobbin 54 in accordance with the above-mentioned pushing operation of the housing 80 with respect to the guide nozzle 60 by the operator, the used second cleaning element 20 is collected from the pressing surface 411 to the winding bobbin 54, and the unused second cleaning element 20 is supplied from the feeding bobbin 52 to the pressing surface 411 of the second cleaning shaft 40. Therefore, the second cleaning element 20 slides while being pressed against the connection end surface 111 of the optical connector 100, and the contaminant adhering to the area AR2 between the two guide pins 112 on the connection end surface 111 is wiped.

Next, when the operator releases the pushing of the housing 80 with respect to the guide nozzle 60, the housing 80 moves backward with respect to the guide nozzle 60 by the elastic force of the biasing member 90. At this time, since the ratchet mechanism (not shown) restricts the counterclockwise rotations in the figure of the bobbins 51 to 54, the bobbins 51 to 54 do not rotate.

On the other hand, the cam pin 84 of the housing 80 relatively slides inside the cam groove 321 of the first cleaning shaft 30 by the releasing operation by the operator, and the first cleaning shaft 30 rotates in a direction opposite to the rotation direction during the above-mentioned pushing operation.

When the cleaning is finished, the operator removes the cleaner 1 from the adapter 240 by pulling out the front-end portion of the cleaner 1 from the insertion port 141 of the adapter 140.

As described above, in the present embodiment, the first cleaning shaft 30 that presses the first cleaning element 10 against the area AR1 around the guide pin 112 on the connection end surface 111 of the optical connector 100 is rotated by the rotation mechanism shown in FIG. 5. Therefore, in the present embodiment, it is possible to bring the first cleaning element 10 into contact with the entire area around the guide pin 112 on the connection end surface 111 of the optical connector 100, and it is possible to reduce the unwiped part left on the connection end surface 111.

Further, in the present embodiment, since the first supply and collection mechanism makes the first cleaning element 10 slide on the connection end surface 111 while rotating the first cleaning element 10 pressed against the connection end surface 111 of the optical connector 100 by the rotation mechanism, it is also possible to reduce the re- adhesion of contaminant.

### <<SECOND EMBODIMENT>>

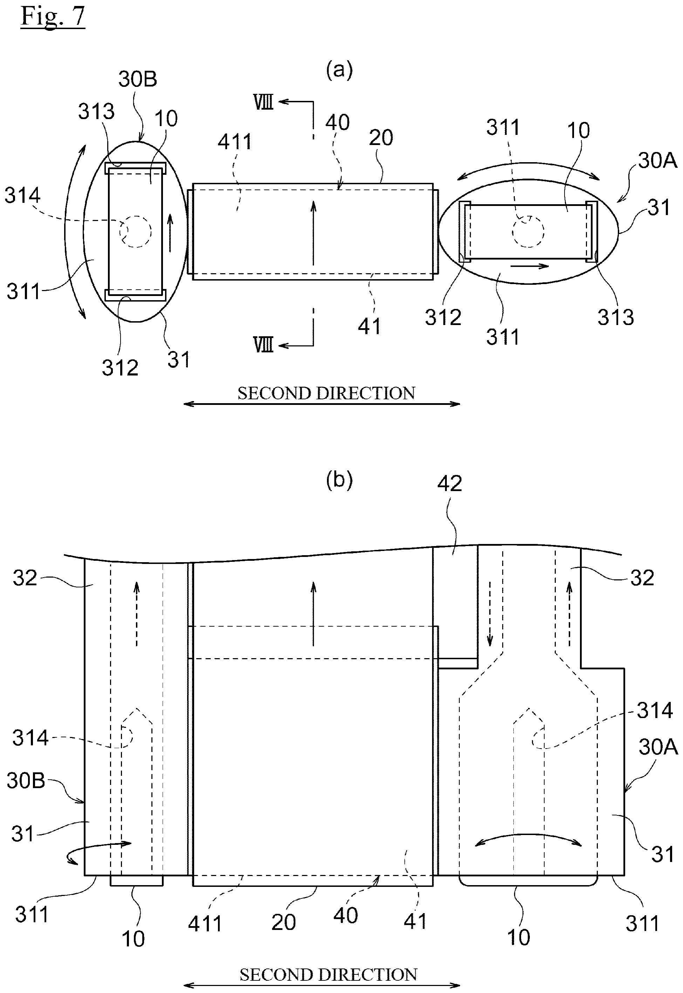

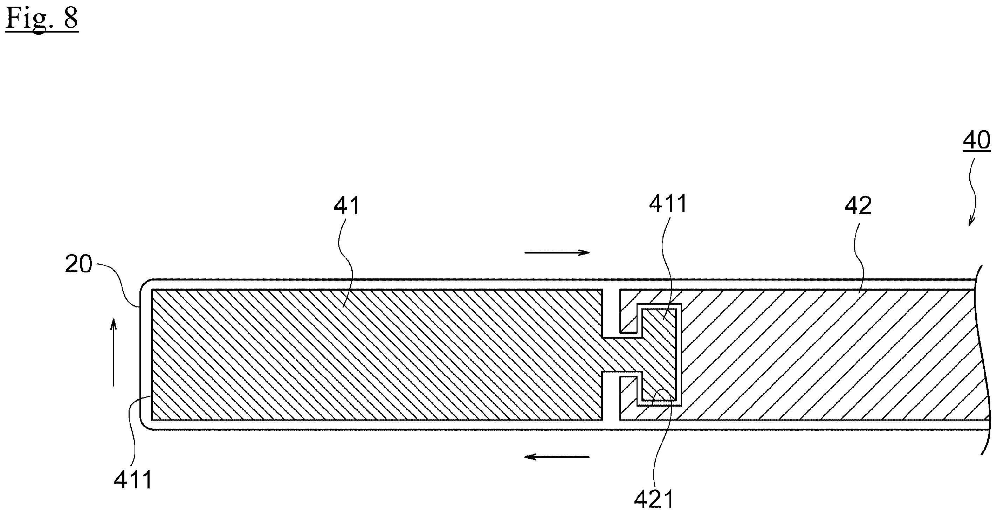

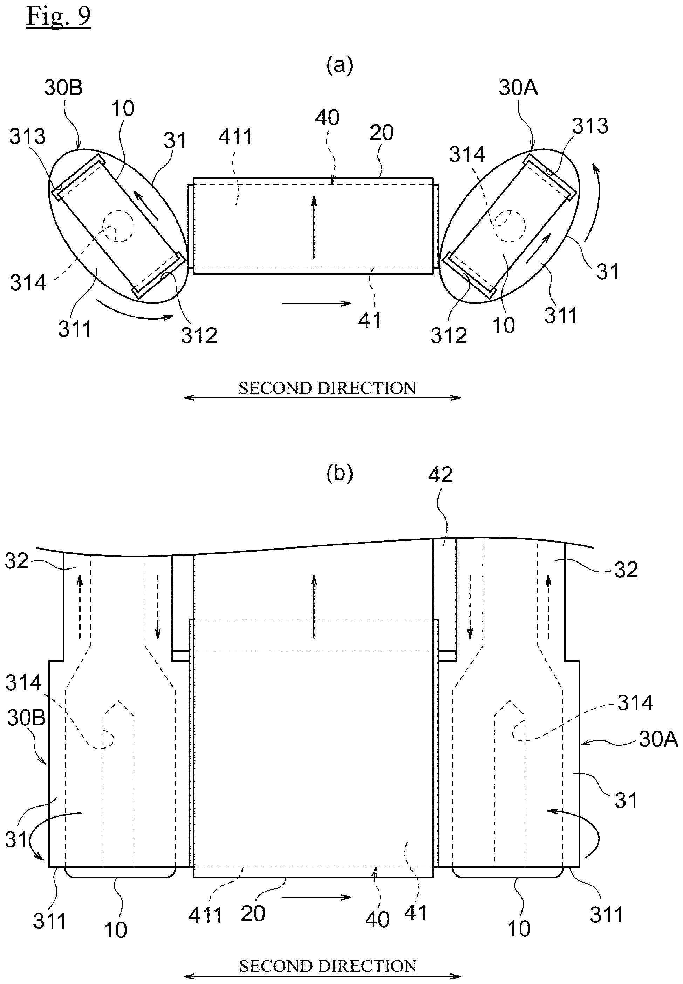

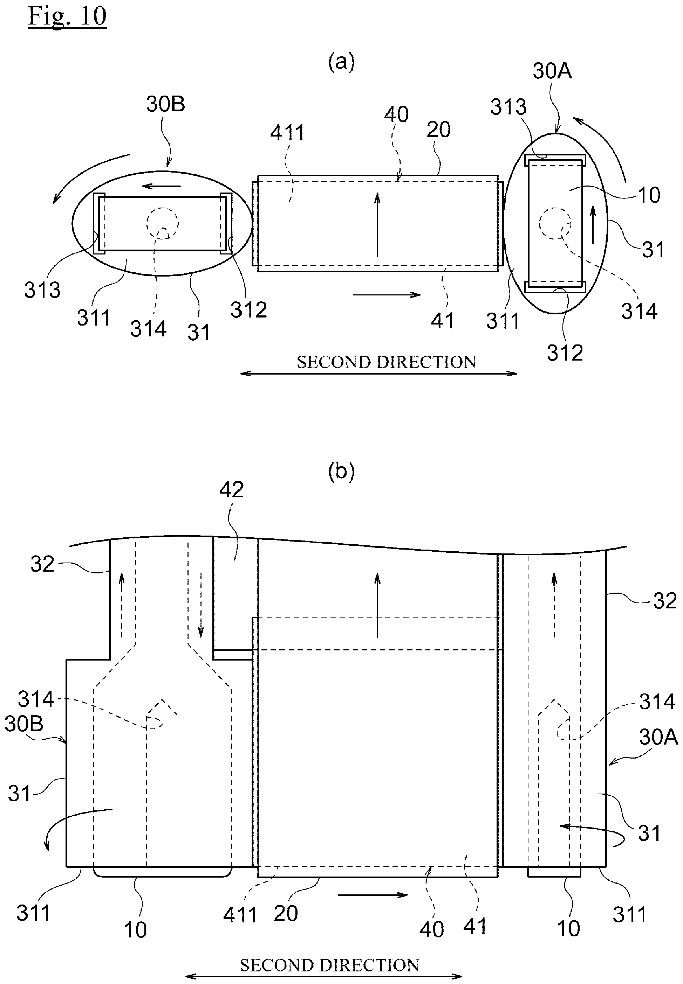

FIG. 7(a) and 7(b) are front and plan views showing the front-end portions of the first and second cleaning shafts 30A, 30B, and 40 in the second embodiment of the present invention and are views corresponding to the above-mentioned FIG. 4(a) and FIG. 4(b). FIG. 8 is a cross-sectional view taken along line VIII-VIII in FIG. 7(a). FIG. 9(a) and FIG. 9(b) are front and plan views showing a state in which the first cleaning shafts 30A and 30B are rotated by 45 degrees from the state shown in FIG. 7(a) and FIG. 7(b). FIG. 10(a) and FIG. 10(b) are front and plan views showing a state in which the first cleaning shafts 30A and 30B are further rotated by 45 degrees from the state shown in FIG. 9(a) and FIG. 9(b).

The present embodiment is different from the first embodiment in that (1) the cross-sectional shape of the front-end portion of the first cleaning shaft is an elliptical, and (2) the cleaner includes a moving mechanism for moving the cleaning head of the second cleaning shaft in the lateral direction, but the other configurations are the same as those of the first embodiment. Hereinafter, only differences of the cleaner in the second embodiment from the first embodiment will be described, and parts having the same configuration as those of the first embodiment will be denoted by the same reference numerals, and description thereof will be omitted.

As shown in FIG. 7(a) and FIG. 7(b), the one first cleaning shaft 30A includes a cleaning head 31 having a pressing surface 311 at the front-end, and a shaft body 32 that supports the cleaning head 31. The cleaning head 31 has an elliptical cross-sectional shape unlike the cross-sectional shape of the front-end end portion of the first cleaning shaft 30 of the first embodiment described above. The guide holes 312 and 313 formed in the pressing surface 311 of the cleaning head 31 are disposed in the vicinity of both ends of the major axis of the ellipse. The insertion hole 314 is open at the center of the pressing surface 311 of the cleaning head 31. The center of the insertion hole 314 substantially coincides with the rotation axis of the first cleaning shaft 30A described later. Although not particularly shown, a cam groove 321 is formed on the outer peripheral surface of the rear end portion of the shaft body 32. The other first cleaning shaft 30B also has the same configuration as the one first cleaning shaft 30A.

The cross-sectional shape of the cleaning head 31 of each of the first cleaning shafts 30A and 30B is not limited to the above as long as it is a non-circular shape. For example, the cross-sectional shape of the cleaning head 31 of each of the first cleaning shafts 30A and 30B may be an oval (a shape formed by connecting semicircles with a pair of straight lines), a polygon, or a polygon with arc-shaped corners, or the like. Further, although not particularly shown, each of the first cleaning shaft 30A and 30B may include a biasing member (for example, a coiled spring or the like) that biases the cleaning head 31 forward.

Although the pair of first cleaning shafts 30A and 30B are rotatably supported by the support body 70 around the first direction as an axis in the present embodiment similar to the first cleaning shaft 30 of the first embodiment described above, the two first cleaning shafts 30A and 30B are supported by the support body 70 in such orientations in which the major axes of the ellipses are in different directions.

For example, as shown in FIG. 7(a) and FIG. 7(b), the one first cleaning shaft 30A is supported by the support body 70 in an orientation in which the direction of the major axis is along the left-right direction in the figure. On the other hand, the other first cleaning shaft 30B is supported by the support body 70 in an orientation in which the direction of the major axis is along the up-down direction in the figure. That is, the two first cleaning shafts 30A and 30B are supported by the support body 70 so that the directions of their major axes are shifted by 90 degrees from each other.

The two first cleaning shafts 30 and 40 can be rotated by the rotation mechanisms similar to those of the first embodiment while maintaining a state in which the directions of the major axes of the first cleaning shafts 30 and 40 are shifted by 90 degrees from each other. That is, in the present embodiment, the rotation mechanisms can rotate the first cleaning shafts 30A and 30B in a state in which the orientations of the cleaning heads 31 with respect to the connection end surface 111 of the optical connector 100 are different from each other. The shifted angle between the directions of the major axes of the two first cleaning shafts 30 and 40 is not particularly limited to the above angle, so long as they are shifted from each other.

As shown in FIG. 7(a) to FIG. 8, the second cleaning shaft 40 includes a cleaning head 41 having a pressing surface 411 at the front-end, and a shaft body 42 that supports the cleaning head 41. The cleaning head 41 includes an engagement protrusion 412 extending in the width direction of the cleaning head 41 at the rear end portion. The shaft body 42 also includes an engagement groove 421 extending in the width direction of the shaft body 42 at the front-end portion. The engagement protrusion 412 is engaged with the engagement groove 421, and the cleaning head 41 can slide along the second direction with respect to the shaft body 42. That is, the "slide mechanism" that allows the sliding movement of the cleaning head 41 along the second direction with respect to the shaft body 42 is realized by the engagement protrusion 412 and the engagement groove 421. Here, the second direction is the arrangement direction of the pair of first cleaning shafts 30A and 30B. The second cleaning shaft 40 may include a biasing member (e.g., a coil spring or the like) that biases the cleaning head 41 forward.

As shown in FIG. 7(a) and FIG. 7(b), the second cleaning shaft 40 is disposed between the pair of first cleaning shafts 30A and 30B. Since the cleaning head 31 of each of the first cleaning shafts 30A and 30B has a non-circular cross section, the cleaning head 41 of the second cleaning shaft 40 can move along the second direction with respect to the shaft body 42 in accordance with the rotations of the first cleaning shafts 30A and 30B.

Specifically, as shown in FIG. 7(a) and FIG. 7(b), when the direction (long length direction) of the major axis of one first cleaning shaft 30A and the direction (short length direction) of the minor axis of the other cleaning shaft 30B is aligned with the second direction (left-right direction in the figure), the cleaning head 41 of the second cleaning shaft 40 is pressed to the left in the figure by the one first cleaning shaft 30A, and the cleaning head 41 is positioned on the side of the other first cleaning shaft 30B in the second direction.

When the support body 70 relatively moves with respect to the housing 80, as shown in FIG. 9(a) and FIG. 9(b), the cleaning heads 31 of the two first cleaning shafts 30A and 30B are rotated by 45 degrees counterclockwise in the figure. As a result of this rotation, the one first cleaning shaft 30A is in an orientation in which the direction of the major axis is inclined by 45 degrees to the right with respect to the vertical direction in the figure. On the other hand, the other cleaning shaft 30B is in an orientation in which the direction of the major axis is inclined by 45 degrees to the left with respect to the vertical direction in the figure.

Further, the cleaning head 41 of the second cleaning shaft 40 is pushed to the right in the figure by the other first cleaning shaft 30B in accordance with the rotations of the first cleaning shafts 30A and 30B, and the cleaning head 41 moves in the second direction toward the one first cleaning shaft 30A.

When the support body 70 further relatively moves with respect to the housing 80 from the state shown in FIG. 9(a) and FIG. 9(b), as shown in FIG. 10(a) and FIG. 10(b), the cleaning heads 31 of the two first cleaning shafts 30A and 30B are further rotated by 45 degrees counterclockwise in the figure. As a result of this rotation, the one first cleaning shaft 30A is in an orientation in which the direction of the major axis is along the up-down direction in the figure. On the other hand, the other cleaning shaft 30B is in an orientation in which the direction of the major axis is along the left-right direction in the figure.

Further, the cleaning head 41 of the second cleaning shaft 40 is further pushed to the right in the figure by the other first cleaning shaft 30B in accordance with the rotations of the first cleaning shafts 30A and 30B, and the cleaning head 41 further moves in the second direction toward the one first cleaning shaft 30A.

That is, in the present embodiment, the "moving mechanism" that moves the cleaning head 41 of the second cleaning shaft 40 along the second direction between the pair of first cleaning shafts 30A and 30B is realized by the non-circular cross-sectional shapes of the first cleaning shafts 30A and 30B, the sliding mechanism including the engagement protrusion 412 and the engagement groove 421 of the second cleaning shaft 40, and the rotation movement of the rotation mechanism described above.

As described above, in the present embodiment, similarly to the first embodiment, the first cleaning shaft 30 that presses the first cleaning element 10 against the area AR1 around the guide pin 112 on the connection end surface 111 of the optical connector 100 is rotated by the rotation mechanism. Therefore, in the present embodiment, it is possible to bring the first cleaning element 10 into contact with the entire area around the guide pin 112 on the connection end surface 111 of the optical connector 100, and it is possible to reduce the unwiped part left on the connection end surface 111.

Further, in the present embodiment, similarly to the first embodiment, since the first supply and collection mechanism makes the first cleaning element 10 slide on the connection end surface 111 while rotating the first cleaning element 10 pressed against the connection end surface 111 of the optical connector 100, it is also possible to reduce the re-adhesion of contaminant.

Further, in the present embodiment, the cleaning head 31 of each of the first cleaning shafts 30A and 30B has a non-circular cross-sectional shape, and the cleaning head 41 of the second cleaning shaft 40 is movable along the second direction by the moving mechanism. Therefore, in the present embodiment, since the area AR1 in which the first cleaning element 10 is assigned to the cleaning thereof and the area AR2 in which the second cleaning element 20 is assigned to the cleaning thereof overlap each other, it is possible to further reduce the unwiped part left on the connection end surface 111 of the optical connector 100.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

Although the above-described cleaner includes the second cleaning shaft 40 interposed between the pair of first cleaning shafts 30A and 30B, the cleaner may not include the second cleaning shaft 40. For example, when the front-end portion of each of the first cleaning shafts 30A and 30B has a non-circular cross-sectional shape and the first cleaning shafts 30Aand 30B can rotate in a state in which the orientations of the cross-sectional shapes are different from each other, the two areas AR1 in which the first cleaning elements 10 are assigned to the cleaning thereof may overlap each other.

Although the moving mechanism moves the cleaning head 41 of the second cleaning shaft 40 using the rotation movement of the rotation mechanism in the second embodiment described above, the moving mechanism may move the cleaning head 41 using a movement other than the rotation movement of the rotation mechanism. Alternatively, the moving mechanism may independently include an actuator for moving the cleaning head 41 of the second cleaning shaft 40.

Furthermore, the object to be cleaned by the above-described cleaner 1 is not limited to the optical connector 100 including the guide pin 112. The above-described cleaner 1 may be used to clean the connection end surface of an optical connector including a guide hole, instead of the guide pin, into which the guide pin can be inserted.

### [EXPLANATIONS OF LETTERS OR NUMERALS]

- 1: Optical connector cleaning tool
- 10: First cleaning element
- 11: Thread-like member
- 20: Second cleaning element
- 30, 30A, 30B: First cleaning shaft
- 31: Cleaning head
- 311: Pressing surface
- 312, 313: Guide hole
- 314: Insertion hole
- 32: Shaft body
- 321: Cam groove
- 40: First cleaning shaft
- 41: Cleaning head
- 411: Pressing surface
- 412: Engagement protrusion
- 42: Shaft body
- 421: Engagement groove
- 51, 52: Feeding bobbin
- 53, 54: Winding bobbin
- 55, 56: Pinion gear
- 60: Guide nozzle
- 70: Support body
- 80: Housing
- 81: Opening
- 82, 83: Rack gear
- 84: Cam pin
- 90: Biasing member
- 100: Optical connector
- 110: Ferrule
- 111: Connection end surface
- 112: Guide pin
- 120: Optical fiber
- 130: Housing
- 140: Adaptor
- 141: Insertion port

## Claims

1. An optical connector cleaning tool that cleans a connection end surface of an optical connector that includes the connection end surface and a guide pin disposed on the connection end surface, the optical connector cleaning tool comprising:
a first cleaning element that the guide pin is capable of penetrating and that comprises a plurality of thread-like members arranged to extend in a same direction;
a first pressing member that comprises:
an insertion hole into which the guide pin is capable of being inserted along a first direction; and
a first pressing surface to which the insertion hole is open and that presses the first cleaning element against the connection end surface; and
a rotation mechanism that rotates the first pressing member about the first direction as an axis.

2. The optical connector cleaning tool according to claim 1, comprising:
a supply and collection mechanism that supplies the first cleaning element to the first pressing surface and collects the first cleaning element from the first pressing surface.

3. The optical connector cleaning tool according to claim 1 or 2, comprising:
the two first pressing members into which the two guide pins of the optical connector are respectively capable of being inserted, wherein
each of the first pressing members has a cross-sectional shape that is non-circular, and
the rotation mechanisms rotate the first pressing members in a state in which orientations of the cross-sectional shapes with respect to the connection end surface are different from each other.

4. The optical connector cleaning tool according to claim 3, comprising:
a second pressing member that is disposed between the first pressing members and that comprises a second pressing surface that presses a second cleaning element against the connection end surface.

5. The optical connector cleaning tool according to claim 4, comprising:
a moving mechanism that moves the second pressing member between the first pressing members along an arrangement direction of the first pressing members.

6. The optical connector cleaning tool according to claim 5, wherein
the moving mechanism moves the second pressing member toward the first pressing member whose a short length direction of the cross-sectional shape is aligned with the arrangement direction in interlocking with rotations of the first pressing members by the rotating mechanisms.

7. The optical connector cleaning tool according to claim 5 or 6, wherein
the moving mechanism moves the second pressing member toward other of the first pressing members by pressing the second pressing member by one of the first pressing members in the arrangement direction in accordance with rotations of the first pressing members by the rotation mechanisms.
